# EUROPEAN PATENT APPLICATION

(11) **EP 2 088 723 A1**
(43) Date of publication of application: **12.08.2009**
(21) Application number: 08101427.6
(22) Date of filing: 08.02.2008
(51) Int. Cl.: H04L 12/56, H04L 12/28

(54) **Method for controlling the steering of the roaming of user equipment in a wireless communication network**

(71) Applicant: NEC Corporation, Minato-ku Tokyo (JP)
(72) Inventor: Fok, Frédéric, 92100 Boulogne-Billancourt (FR); Roger, Vincent, 92800 Puteaux (FR); Haessler, Ludovic, 94300 Vincennes (FR)
(74) Representative: Ilgart, Jean-Christophe

(57) **Abstract**

The invention concerns a method for controlling the steering of the roaming of a user equipment (UE) by the HPLMN to which said UE is attached via a WLAN Access Point wherein said HPLMN sends a EAP Request Identity message to said UE including a SoR information (SoR command) and said UE performs a network reselection based on said SoR information as soon as possible.

## Description

### TECHNICAL DOMAIN

The invention pertains to telecommunication fields and concerns a method for controlling the steering of the roaming of a user equipment (UE) by the HPLMN (Home Public Land Mobile Network) to which said UE is attached via a Wireless Local Access Network (WLAN) via a WLAN Access Point.

### STATE OF PRIOR ART

In 3GPP (Third Generation Partnership Project) TS 23.122 specification for 2G/3G access, Steering of Roaming (SoR) of a user equipment (UE) consists in the update of the operator controlled PLMNs selector with Access Technology (PLMN list) triggered by the reception by said UE of a USAT (Usim Application Toolkit) command Refresh and followed by a PLMN reselection performed as soon as possible.

It is foreseen that for IWLAN (Interworking Wireless Local Area Network) access, the Steering of Roaming will also consist in the update of operator preferred Public Land Mobile Networks (PLMNs) list information stored in UE's USIM and followed by a PLMN reselection as soon as possible, with the difference that the update will occur on operator controlled PLMN selector for WLAN (Wireless Local Area Network) access (IWLAN PLMN list) .

The 3GPP TS 22.234 specification "Requirements on 3GPP system to Wireless Local Area Network (WLAN) interworking", v8.1.0, states that "it shall be possible for the Home PLMN (HPLMN) at any time to direct the UE to search for a specific PLMN connected by I-WLAN and, if it is available, move to that PLMN as soon as possible unless the UE is in manual mode". Besides, Extensible Authentication Protocol (EAP) defined in ITEF RFC 3748 June 2004, has been extended as defined in IETF RFC 4284 January 2006 "Identity Selection Hints for the Extensible Authentication Protocol (EAP)" to enable PLMN discovery for I-WLAN procedures but not EAP-based protocol exist to provide means for Steering of Roaming.

It is to be noted that the 3GPP IWLAN specifications does not define a SoR mechanism for IWLAN access and that the existing methods in 2G/3G Access usually use specific Short Message Service (SMS) push technologies or alike. Those methods are not suitable for WLAN Access because the SMS has initially been designed for cellular access. Moreover, even if there could be similar technologies (i.e. SMS over IP) they require the User Equipment to necessarily embed a SIP stack (Session Initiation Protocol).

The invention aims at defining a suitable Steering of Roaming method that allows an HPLMN to direct a UE to search for a different PLMN at any time when said UE is attached via WLAN.

Another object of the invention is a method and means to enable a Steering of Roaming to a different Access Point or to a different Access network than a WLAN Network using the existing protocols.

### PRESENTATION OF THE INVENTION

The object of the invention is achieved by means of a method for controlling the steering of the roaming of a user equipment (UE) by the HPLMN to which said UE is attached via a WLAN, wherein said HPLMN Sends a EAP Request Identity message to said UE including a SoR information (SoR command) and said UE performs a network reselection based on said SoR information.

According to the invention, said UE performs the network reselection based on said SoR information as soon as possible.

According to a first embodiment of the invention, the SoR information is a PLMN redirection command.

According to a second embodiment of the invention, the SoR information is a Steering command to a specific PLMN via an IWLAN or via another Access Network (e.g. 3GPP Radio Access Technology (RAT)).

According to a third embodiment of the invention, the SoR information is an access redirection command to a different access network type (e.g. 3GPP RAT).

According to a fourth embodiment of the invention, said SoR information is an access redirection to an available WLAN Access Point different from the current WLAN Access Point.

According to a fifth embodiment of the invention, the SoR information is a Steering Command to a specific WLAN Access Point.

In the first and second embodiments of the invention, upon reception of the SoR information, the UE Updates the list of PLMNs for IWLAN if the SoR information refers to a PLMN, sends an EAP Response Identity message to the HPLMN and performs an automatic network reselection based on said SoR information as soon as possible, thereby leading the UE to preferentially select a different PLMN.

In the third and fourth and fifth embodiments of the invention, upon reception of the SoR information, said UE updates the list of WSID if said SoR information refers to an access network redirection or to a steering to a specific WLAN Access Point, sends an EAP Response Identity message to the HPLMN, and performs a network reselection based on said SoR information as soon as possible, thereby leading the UE to preferentially select a different WLAN Access Point or a different access network type (e.g. 3GPP RAT).

When the SoR information is a PLMN redirection or a Steering command to a specific PLMN, the SoR information may further include an indication on which Access type different than IWLAN or on which different WLAN AP (WSID) applies the PLMN redirection or the steering to a specific PLMN.

Optionally, the SoR information further includes Timer Value specified by the HPLMN to avoid all UEs attached to said HPLMN to simultaneously apply a SoR.

### BRIEF DESCRIPTION OF THE FIGURE

Other features and advantages of the invention will appear from the following description taken as a non limiting example with reference to the following drawings in which;
- figure 1 is a schematic representation of the essential steps of the SoR according to the invention
- figure 2 represents the possible Steering of Roaming commands according to the invention.
- figure 3 represents the signalling exchange between a UE and a base station to perform a SoR according to the invention.
- figure 4 is a block diagram illustrating the UE action when the Steering of Roaming command is a PLMN redirection.
- figure 5 is a block diagram illustrating the UE action when the Steering of Roaming command is a Steering to a specific PLMN.
- figure 6 is a block diagram illustrating the UE action when the Steering of Roaming command is an access redirection
- figure 7 is a block diagram illustrating the UE action when the Steering of Roaming command is a Steering to a specific Access Point

### DESCRIPTION OF A DETAILED ENBODIMENT OF THE INVENTION

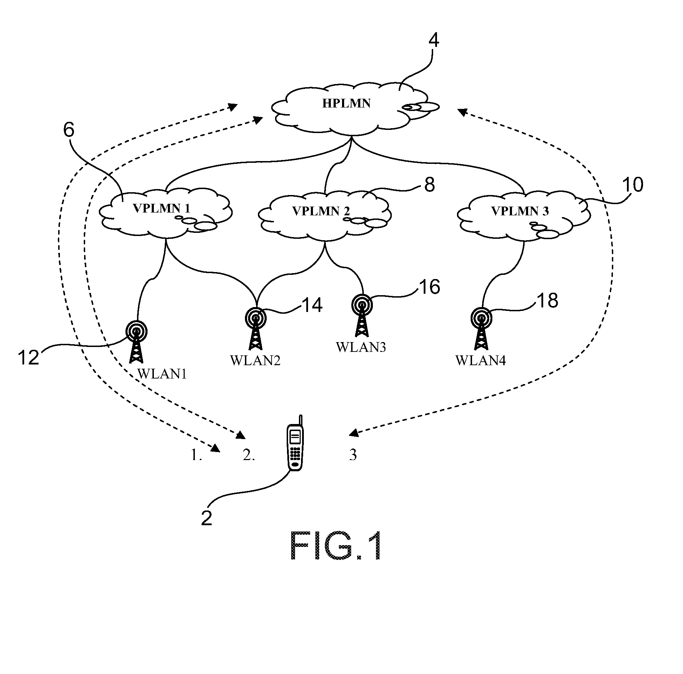

Referring to figure 1, a UE 2 attached to an HPLMN 4, is roaming in an area comprising a first Visited PLMN (VPLMN) 6, a second VPLMN 8 and a third VPLMN 10. The roaming area comprises a WLAN1 comprising a first Access Point 12, a WLAN2 comprising a second Access Point 14, a WLAN3 comprising a third Access Point 16 and a WLAN4 comprising a fourth Access Point 18.

The UE 2 performs a network selection according to the 3GPP Interworking WLAN procedures as follows:
- The UE 2 attaches to WLAN1 and registers on VPLMN 6 using EAP protocol. During the registration procedure, the HPLMN 4 authenticates the UE 2, authorizes said UE 2 to perform the network selection and acquires the knowledge about which network the UE is registered to.
- If the HPLMN 4 decides to steer the UE 2 to another PLMN, the third VPLMN 10 for example, it sends a SoR command to the UE 2 using the EAP protocol. Upon reception of said command, the UE 2 takes into account the SoR command and initiates a new network selection using an updated list of preferred networks.

As a result of the Steering of Roaming, the UE 2 attaches to WLAN4 and registers to VPLMN 10.

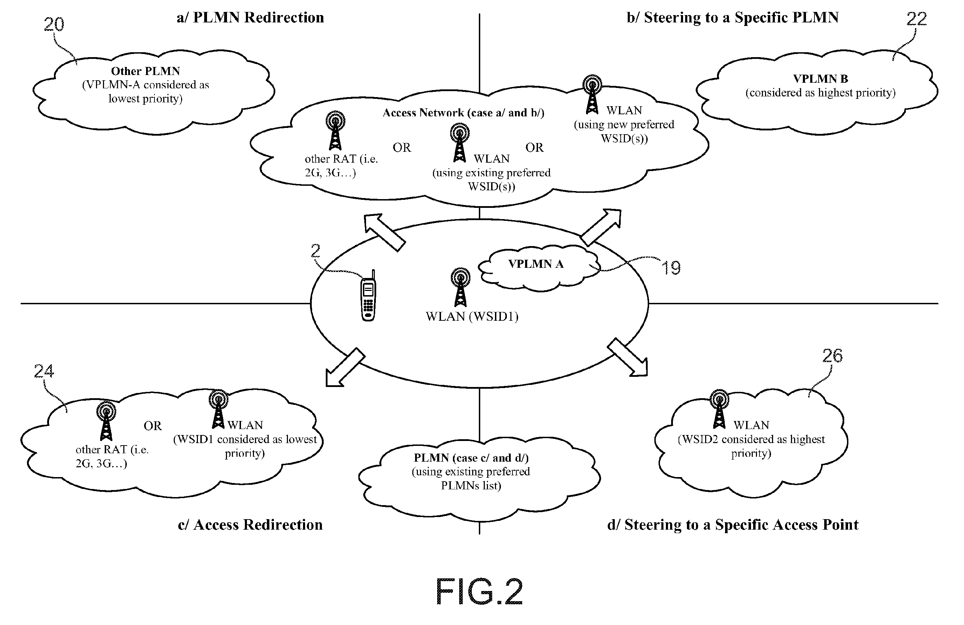

Figure 2 illustrates the possible Steering of Roaming Commands wherein the parameters are a logical description of the commands as described here after.

As illustrated by figure 2, the Steering of Roaming Commands may concern:
a- a PLMN Redirection to another PLMN 20 than the one to which the UE is initially registered; and eventually to another Access Type (e.g. 3GPP) or another WLAN Access Point. In this case, the SoR command parameters are defined as follows:
   SoR-Command ::= {
   <SoR-Type> ,
   <Access-SoR-Type>
   },
   Where <SoR-Type> is set to 'PLMN-redir';
   And where <Access-SoR-Type>, when present, is set to 'Access-redir' [<Access-Type>] or 'Specific-AP' with WSID(s) indication;
   and where <Access-SoR-Type> is OPTIONAL.
b- A Redirection to a specific PLMN 22 considered as highest priority, and eventually to another Access Type (e. 3GPP) or another WLAN Access Point, in this case, the SoR command parameters are defined as follows:
   SoR-Command ::= {
   <SoR-Type>,
   <Access-SoR-Type>
   },
   Where <SoR-Type> is set to 'Specific-PLMN' with indication of PLMN-id(s);
   And where <Access-SoR-Type>, when present, is set to 'Access-redir' [<Access-Type>] or 'Specific-AP' (<WSID>)>;
   and where <Access-SoR-Type> is OPTIONAL.
c- A Redirection to another Access Type 24 (e.g. 3GPP) or another WLAN Access Point, in this case, the SoR command parameters are defined as follows:
   SoR-Command ::= {,
   <Access-SoR-Type>
   },
   where <Access-SoR-Type> is set to "Access-redir' [<Access-Type>]
d- A steering to a specific WLAN access point 26, in this case, the SoR command parameters are defined as follows:
   SoR-Command: = { <Access-SoR-Type>
   },
   where <Access-SoR-Type> is set to 'Specific-AP' with WSID(s) value indication

We assume that the UE 2 is initially registered on a VPLMN-A 19 via IWLAN and receives a SoR command included in an EAP request. The parameters included in the command are described here after.

The <SoR-Type> parameter is used for PLMN steering purpose and enables to differentiate between a PLMN redirection (<SoR-Type> is set to 'PLMN-redir') and a steering to a specific PLMN (<SoR-Type> is set to `Specific-PLMN'). In case the <SoR-Type> parameter value refers to a steering to a specific PLMN, the command further includes PLMN identifier(s).

The <Access-SoR-Type> parameter is used for access steering purpose and enables to differentiate between an Access Redirection (<Access-SoR-Type> is set to 'Access-redir') and a steering to a specific WLAN Access Point (<Access-SoR-Type> is set to 'Specific-AP').

In case the <Access-SoR-Type> parameter value refers to an Access Redirection, the SoR command enables, on the one hand, to steer the UE to a different Access Technology than WLAN, in which case an additional <Access-Type> parameter is further provided indicating which Access Technology the UE should preferentially reselect such as 3GPP GERAN, UTRAN or E-UTRAN, or, on the other hand, to steer the UE within IWLAN technology to a different Access Point than currently selected Access Point, in which case <Access-Type> parameter is omitted.

In case the <Access-SoR-Type> parameter value refers to a steering of roaming to a specific WLAN Access Point, the Access Point Identifier value WSID is indicated.

Therefore a SoR Command refers to a PLMN steering when <SoR-Type> is provided, being either a PLMN redirection (case a) or a steering to a specific PLMN (case b), or refers to an Access steering when <Access-SoR-Type> is provided, being either an access redirection to another RAT or within IWLAN (case c) or a steering to a specific Access Point (case d), or refers to a combination of both a PLMN steering and an Access steering (cases a and b).

In case a, the SoR Information consists in a PLMN Reselection. The UE 2 reselects the PLMN 20 in place of VPLMN-A 19. As such the VPLMN-A 19 is considered as the lowest priority PLMN. Optionally, the UE 20 is further redirected to another Access type (e.g. a 3GPP RAT) or another Access Point. Therefore the SoR-Type value is "PLMN-Redir" and the Access-SoR-Type is optionally indicated for access redirection or redirection to a specific WLAN Access Point.

In case b, the SoR Information consists in a Steering to a specific PLMN being the VPLMN-B 22. As such the VPLMN-B 22 is indicated in the SoR Information and the UE 2 is redirected to this specific PLMN considered as the highest priority PLMN. Optionally, the UE 2 is further redirected to another Access type (e.g. a 3GPP RAT) or another Access Point. Therefore the <SoR-Type> value is set to "Specific-PLMN" with an indication of the PLMN Identifier and the <Access-SoR-Type> is optionally indicated for access redirection or for a redirection to a specific WLAN Access Point.

In case c, the SoR Information consists in an Access Redirection. As such the UE 2 is redirected to another Access type (e.g. a 3GPP RAT) or another Access Point 24. Therefore there is no SoR-Type indication, instead the <Access-SoR-type> value is set to "Access-Redir". Optionally the <Access-Type> parameter is indicated to specify another RAT. So if no <Access-Type> is indicated the redirection refers to a WLAN Access point redirection, wherein the current WLAN Access point is considered as the lowest priority WLAN Access point. If however the <Access-Type> is present then the redirection refers to a RAT selection (e.g. 3GPP RAT reselection).

In case d, the SoR Information consists in a Steering to a specific Access Point 26. As such the UE requires to associate with another Access Point than the one on which it is currently associated. Therefore there is no <SoR-Type> parameter indication, instead the <Access-SoR-Type> value is set to "Specific-AP" and an indication of the highest priority WLAN Access Point Identifier is given.

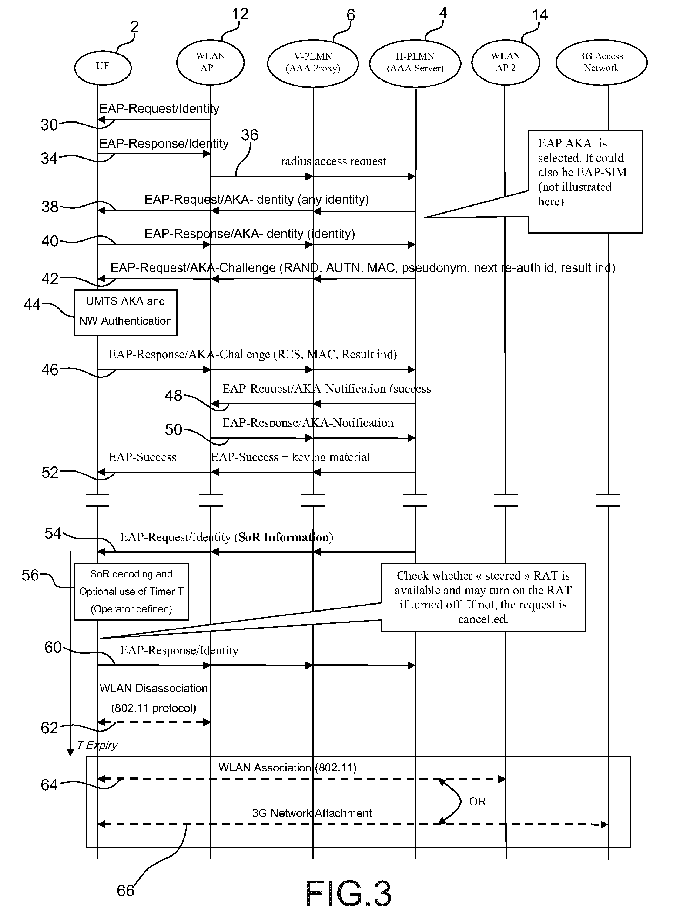

Figure 3 illustrates the main steps of the method according to the invention.

We assume that the UE 2 performs a network selection according to the 3GPP Interworking WLAN procedures, i.e. the UE 2 attaches to WLAN1 and registers on VPLMN1 using EAP protocol. During the registration procedure, the HPLMN 4 authenticates and authorizes the user to perform such network selection and thus acquires the knowledge about which network the UE 2 is registered to.

The procedure for performing such selection comprises the steps 30 to 52 described below by reference to figure 1 and figure 3.

At step 30, the WLAN Access Point 12 (WLAN AP1) of the WLAN1 sends an EAP-Request/Identity to the UE 2.

At step 34, the UE 2 sends an EAP-Response/Identity to the WLAN Access Point 12.

At step 36, said WLAN Access Point 12 sends a radius access request to the VPLMN 6 and to the HPLMN 4.

At step 38, the HPLMN 4 sends an Authentication and Key Agreement (AKA) message EAP-Request/AKA-Identity to the WLAN Access Point 12, the VPLMN 6 and to the UE 2. It is to be noted that the HPLMN 4 may request an EAP-SIM authentication in place of EAP AKA request therefore leading to EAP SIM authentication procedure.

At step 40, the UE 2 sends an EAP-Response/AKA-Identity to the WLAN Access Point 12, VPLMN 6 and to the HPLMN 4.

Upon reception of said EAP-Response/AKA-Identity, at step 42, the HPLMN 4 sends an EAP-Request/AKA-Challenge (RAND, AUTN, MAC, pseudonym, next re-auth id, result ind) to the WLAN Access Point 12, the VPLMN 6 and to the UE 2.

At step 44, the UE 2 performs the UMTS Authentication and Key Agreement (UMTS-AKA) and the Network authentication procedures and send a EAP-Response/AKA-Challenge (RES, MAC, Result ind) to the WLAN Access Point 12, VPLMN 6 and to the HPLMN 4 (step 46).

At step 48, the HPLMN 4 sends an EAP-Request/AKA-Notification (success) to the VPLMN 6 and to WLAN Access Point 12.

At step 50, the WLAN Access Point 12 sends an EAP-Response/AKA-Notification to the VPLMN 6 and to the HPLMN 4.

Upon reception of said notification, the HPLMN 4 sends at EAP-Success with the keying material to the WLAN Access Point 12, to the VPLMN 6, and to the UE 2 (step 52).

In addition, to enable a Steering of Roaming to a different PLMN and/or a different Access than the WLAN Access Point 12, at step 54, the HPLMN 4 Sends an EAP Request Identity message including a SoR information (SoR command) to the WLAN Access Point 12, to the VPLMN 6, and to the UE 2.

Said SoR information (SoR command) may be a PLMN redirection, a Steering to a specific PLMN (via IWLAN or 2G/3G), an Access redirection (within WLAN or to another Access than WLAN such as 3GPP RAT) or a Steering to a specific WLAN Access Point.

Upon reception of said SoR command, at step 56, the UE 2 decodes the SoR information and optionally uses a timer defined by the operator to schedule the disassociation from the WLAN Access Point 12 and the association to the WLAN Access Point 14 defined in the SoR command.

At step 60, the UE 2 sends an EAP-Response/Identity to the WLAN Access Point 12, to the VPLMN 6, and to HPLM 4.

At step 62, the UE 2 dissociates from the WLAN Access Point 12 and performs either a WLAN association via the WLAN Access Point 14 (step 64) or a 3G Network attachment (step 66).

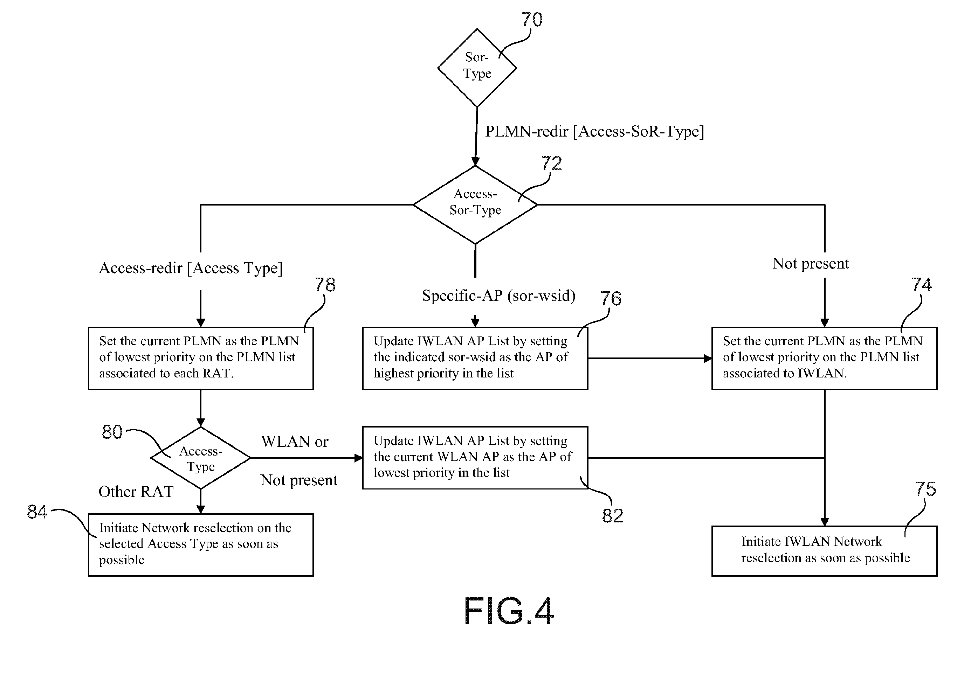

Figure 4 represents the action performed by the UE 2 upon reception of a SoR Command referring to a PLMN Redirection (case a in figure 2).

The following steps are performed in this case:

Step 70: determining whether the SoR command contains a PLMN steering command by checking the presence and value of <SoR-Type> parameter. A PLMN steering command is included if the <SoR-Type> parameter is present, and refers to a PLMN redirection if it is set to 'PLMN-redir' or refers to a steering to a Specific PLMN if it is set to 'Specific-PLMN'.

Step 72: checking if the SoR command further contains an Access steering command by checking the presence and value of <Access-SoR-Type> parameter. An access steering command is indicated if the <Access-SoR-Type> parameter is present, and refers to an Access redirection if it is set to 'Access-redir' or refers to a steering to a specific Access if it is set to `Specific-AP'.

Step 74: If the SoR command does not contain an Access steering command referring to an access redirection, the UE 2 sets the current PLMN as the PLMN of lowest priority on the PLMN list associated to IWLAN and Initiates IWLAN Network reselection as soon as possible at step 75.

Step 76, if the SoR command contains an access steering command referring to a steering to a specific WLAN -AP (sor-wsid), the UE 2 Updates IWLAN AP List by setting the indicated sor-wsid as the AP of highest priority in the list and performs the steps 74 and 75.

Step 78: If the SoR command contains an access steering command referring to an Access-redirection [Access Type], the UE 2 sets the current PLMN as the PLMN of lowest priority on the PLMN list associated to each RAT, and, checks the Access type at step 80.

If the Access type is a WLAN access or if there is no access type in the Sor Command, the UE 2 Updates IWLAN AP List by setting the current WLAN AP as the AP of lowest priority in the list at step 82 and performs the step 75.

Else, if the Access type is another RAT, the UE 2 Initiates Network reselection on the selected Access Type as soon as possible at step 84.

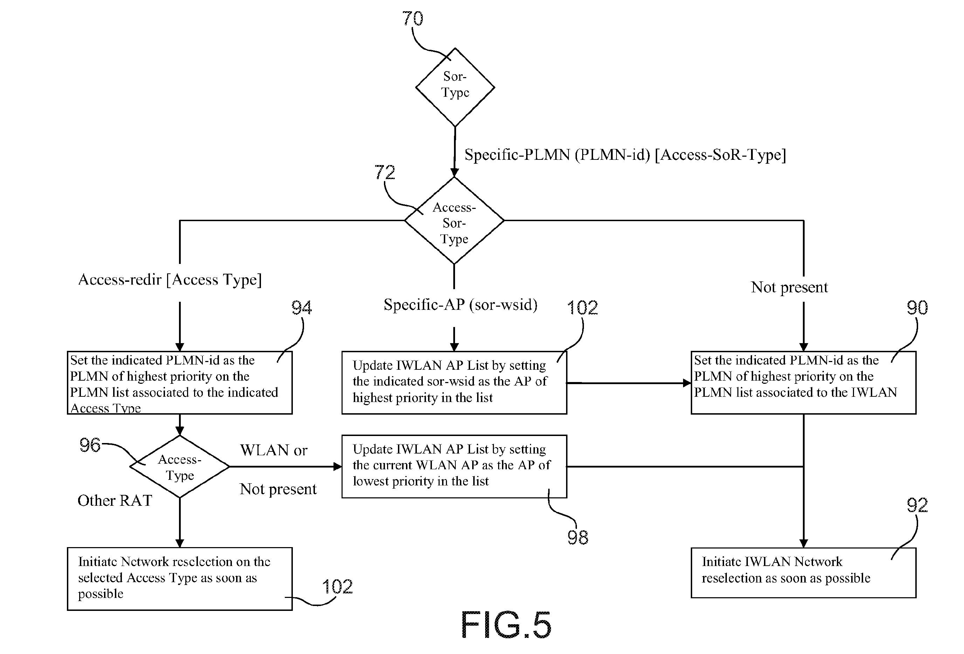

Figure 5 represents the action performed by the UE 2 when receiving a SoR Command referring to a Steering to a specific PLMN (case b in figure 2).

The UE 2 performs the steps 70 and 72.

If the SoR command does not further contain an Access steering command referring to an access redirection, at step 90 the UE 2 updates the IWLAN PLMN list (indicated PLMN becomes the PLMN of highest priority), and initiates an IWLAN network selection as soon as possible at step 92.

If the SoR command further contains an access redirection to another radio access technology, at step 94 the UE 2 updates the PLMN list for the indicated radio access technology (indicated PLMN becomes the PLMN of highest priority), check the access type at step 96.

If the Access type is a WLAN access or if there is no access type in the Sor Command, the UE 2 Updates IWLAN AP List by setting the current WLAN AP as the AP of lowest priority in the list at step 98.

Else, if the Access type is another RAT, the UE 2 Initiates Network reselection on the selected Access Type as soon as possible at step 100.

If the SoR command contains a specific AP (sor-wsid), at step 102, the UE 2 Updates IWLAN AP List by setting the indicated sor-wsid as the AP of highest priority in the list and performs the steps 90 and 92.

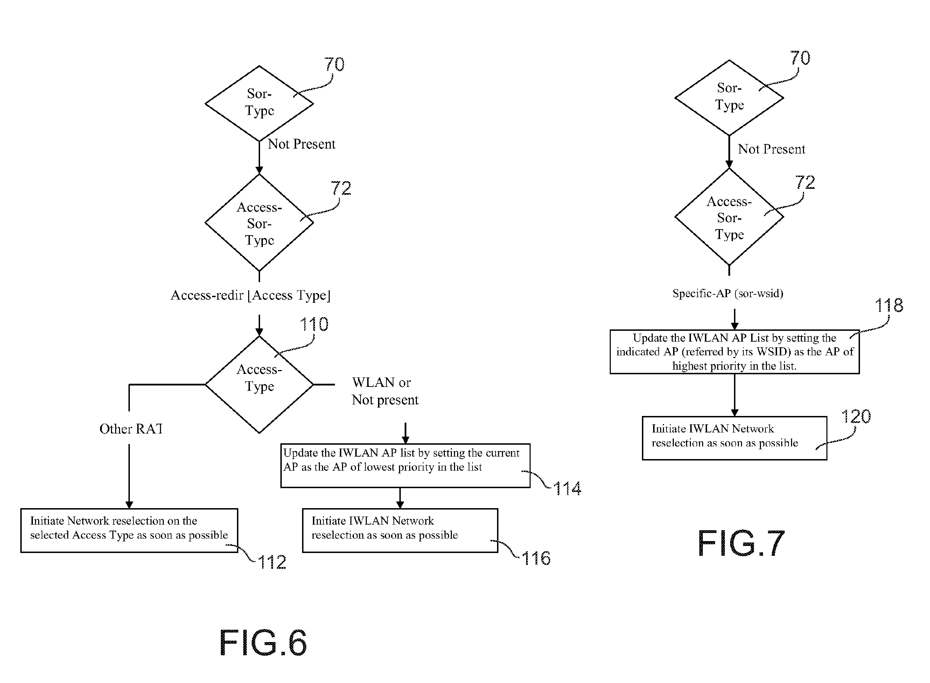

Figure 6 represents the action performed by the UE 2 upon reception of a SoR Command referring to an Access Reselection (case c in figure 2).

The UE 2 performs steps 70 and 72 as in the case of figure 4 and 5.

At step 110, the UE 2 checks the Access type.

If Access type refers to a radio access technology different than WLAN, at step 112, the UE 2 initiates a network selection on the indicated RAT as soon as possible.

Otherwise, i.e. if the access type is not present or refers to WLAN, at step 114, the UE 2 updates the WSID list (current WSID set as lowest priority) and initiates an IWLAN network reselection as soon as possible at step 116.

Figure 7 represents the action performed by the UE 2 upon reception of SoR Command referring to an Access Reselection (case d in figure 2).

The UE 2 performs steps 70 and 72 as in the case of figure 4, 5 and 6.

At step 118, the UE updates the WSID list (indicated WSID set as highest priority) and initiates an IWLAN network reselection as soon as possible at step 120.

## Claims

1. Method for controlling the steering of the roaming of a user equipment (2) by the HPLMN (4) to which said user equipment (2) is attached via a WLAN Access Point, **characterized in that** said HPLMN (4) Sends a EAP Request Identity message to said user equipment (2) including a SoR information (SoR command) and said user equipment (2) Perform a network reselection based on said SoR information.

2. Method according to claim 1, wherein said user equipment (2) Perform the network reselection based on said SoR information as soon as possible.

3. Method according to claim 2, wherein said SoR information is a PLMN redirection.

4. Method according to claim 2, wherein said SoR information is a Steering command to a specific PLMN via an IWLAN or via another Access Network (e.g. 3GPP RAT).

5. Method according to claim 2, wherein said SoR information is an access redirection Command to a different access network type such as 3GPP RAT.

6. Method according to claim 2, wherein said SoR information is an access redirection to an available WLAN Access Point different from the current WLAN Access Point

7. Method according to claim 2, wherein said SoR information is a Steering Command to a specific WLAN Access Point.

8. Method according to claim 2 or 3, wherein said SoR information further includes an access redirection Command to a different radio access technology than WLAN.

9. Method according to claim 2 or 3, wherein said SoR information further includes an access redirection Command to an available WLAN Access Point different from the current WLAN Access Point.

10. Method according to claim 2 or 3, wherein said SoR information further includes an access redirection Command to a specific WLAN Access Point.

11. Method according to claim 2 or 3, wherein upon reception of the SoR information, said user equipment (2) Updates the list of PLMNs for IWLAN if the SoR information refers to a PLMN, sends a EAP Response Identity message to the HPLMN (4) and performs an automatic network reselection based on said SoR information as soon as possible leading to the selection by said UE of a different PLMN.

12. Method according to anyone of claims 4 to 10, wherein upon reception of the SoR information, said user equipment (2) updates the list of WSID if said SoR information refers to an access network, sends an EAP Response Identity message to the HPLMN, and performs a network reselection based on said SoR information as soon as possible, thereby leading the UE to preferentially select a different WLAN Access Point or a different access network type.

13. Method according to claim 1, wherein said SoR information further includes Timer Value specified by the HPLMN to avoid all user equipments attached to said HPLMN (4) to simultaneously apply a SoR.
